# EUROPEAN PATENT APPLICATION

(11) **EP 1 207 505 A1**
(43) Date of publication of application: **22.05.2002**
(21) Application number: 00124901.0
(22) Date of filing: 15.11.2000
(51) Int. Cl.: G07F 19/00

(54) **Method for payment, user equipment, server, payment system and computer programme product**

(71) Applicant: TELEFONAKTIEBOLAGET LM ERICSSON (publ), 126 25 Stockholm (SE)
(72) Inventor: Boylan, Cornelius, 52511 Geilenkirchen (DE); Zavagli, Guido, 52062 Aachen (DE)
(74) Representative: Jostarndt, Hans-Dieter

(57) **Abstract**

The invention relates to a method of automatically paying an amount to a merchant account, wherein a merchant identifier and a transaction amount are acquired from a user equipment, wherein the transaction amount is verified and upon receipt from a verification, the transaction amount is transferred from the customer account to the merchant account and wherein at least one parameter of the payment depends on the geographical position of the user equipment. The user equipment sends a purchase request message PRM to a first server, wherein the purchase request message PRM includes information about the location of the user equipment UE. The first server sends an authorization request message ARM which contains the location information to an authorization server AS and the authorization server AS decides about an authorization of the payments by evaluating the location information. The authorization server AS sends an authorization response message ARPM to the first server S1 depending on the evaluation of the location information.

## Description

### Field of the invention :

The invention relates to the area of electronic payment. A number of secure transaction processing schemes has been proposed to allow payment activities. Electronic payments cover different aspects as for example payment activities over the Internet or according to Internet related protocols or payments with smart cards at points of sale (POS). Especially wireless user equipments are seen as a major enabler of electronic commerce.

The International patent application WO 98/47116 describes a method of facilitating automated payment from a customer account of a customer financial institution to a merchant account of a merchant financial institution with determining whether a mobile station of the customer and a merchant terminal are within a predetermined geographical proximity, and wherein transfer of the transaction amount from the customer account to the merchant account is precluded unless the customer mobile station and the merchant terminal are within the predetermined geographical proximity.

Though the method described in the International patent application WO 98/47116 enables high security levels of payment, it is still desirable to achieve a more flexible solution which also includes a high degree of security.

It is an object of the invention to create a method which enables a secure payment and which effectively and efficiently supplies users of user equipments with varying payment abilities.

This problem is solved advantageously by the method of claim 1, the user equipment of claim 14, the server of claim 18, the payment system of claim 19 and the computer programme product of claims 20, 22 and 23.

The invention makes use of the idea, that the user equipment sends a purchase request message, wherein the purchase request message includes information about the location of the user equipment, to a first server and that the first server generates an authorization request message which includes information about the location and about the payee and/or a reason of payment and sends the authorization request message to an authorization server.

The server is a logical element which preferably acts as a service node of a telecommunication network.

Further advantageous embodiments and implementations of the invention are achieved according to the claims 2 to 13, 15 to 17 and 21.

According to the invention an automatic payment to a merchant account is performed on the basis of a purchase request message from a user equipment to a first server, which is most preferably a logical node operated by or on behalf of the merchant. The purchase request message includes location information. Afterwards the first server sends an authorization request message, which also contains location information of the user equipment. Furthermore the authorization request message contains at least one payment condition parameter. The payment condition parameter can be chosen flexibly. For example the payment condition parameter contains information about the payer, the payee or the amount of payment.

In an advantageous implementation of the method, the user equipment, the server, the payment system and the computer programme product, the authorization request message also contains information about at least one payment condition parameter.

One preferred embodiment implies a handling of payment transactions according to two different parameters. One of these parameters is based on location information of the user equipment, which is accessed by the user. The other parameter that influences the handling of the transaction is based upon information about circumstances of the transaction.

This implementation allows an adaptation of transaction procedures to different legal systems. For example it is possible to prevent actions which are undesired in certain legal entities, for example concerning illegal gambling. A recent court decision in the United States ruled that a credit card company was liable for the fact that one of their customers made an illegal gambling transaction via the Internet, whereby the gambling server was located in a foreign country.

In a preferred embodiment of the method, the user equipment, the server, the payment system and the computer programme product, the authorization centre decides about the authorization of the payment by evaluating the location information and the payment condition parameter.

The evaluation of the location information and the payment condition parameter enable the payment provider to authorize payment transaction by regarding the current location information of the user. For example, a payment provider might use different risk management policies depending on the current location of the customer. The invention allows to implement these risk management policies into automated payment systems.

In an advantageous implementation of the method, the user equipment, the server, the payment system and the computer programme product, the authorization server decides about the authorization by evaluating the country, in which the user equipment is located.

It is possible to reduce the amount of accessible money according to the risk status of countries. It is even possible, to prohibit money transfer in high risk countries.

In a preferred embodiment of the method, the user equipment, the server, the payment system and the computer programme product, the second server decides about the authorization by evaluating a risk status of the region in which the user equipment is located.

Through this implementation it is for example possible to reduce the accessible amount in disadvantaged areas.

In an advantageous implementation of the method, the user equipment, the server, the payment system and the computer programme product, the payment condition parameter contains information about the payee.

In a preferred embodiment of the method, the user equipment, the server, the payment system and the computer programme product, the payment condition parameter contains information about the payer.

In an advantageous implementation of the method, the user equipment, the server, the payment system and the computer programme product, the payment condition parameter contains information about a reason of the payment.

In a preferred embodiment of the method, the user equipment, the server, the payment system and the computer programme product, the location information is obtained from a position of a base station of a communication system, wherein the base station is capable of sending and/or receiving signals from the user equipment.

In an advantageous implementation of the method, the user equipment, the server, the payment system and the computer programme product, the relative position between the user equipment and a base station of a multiple access communication system is evaluated.

In a preferred embodiment of the method, the user equipment, the server, the payment system and the computer programme product, the user equipment evaluates its position relative to signal sending devices of a positioning system.

In an advantageous implementation of the method, the user equipment, the positioning system is the Global Positioning System (GPS).

Especially for the issuers of credit cards it is advantageous, that the invention enables them to control credit card transactions better. Furthermore it is advantageous, that the transactions are subject to varying regional and national regulations.

The invention allows an implementation of the regional and national regulations to the decision about the payment.

Any of this measures reduces the risk of bad debt as well as the risk of the card issuing organisation of being held responsible for illegal actions performed by the users of credit cards issued by the credit card organisation.

A combination of the preferred embodiments of the invention, especially a usage of different payment condition parameters, reflecting different aspects of the payment, further decreases the risks for the credit card issuers.

The risks for the credit card issuers can be even further reduced, if the purchase request message is at least partly encrypted. It is especially useful, if at least the location information is encrypted. This prevents, that a fraudulent merchant manipulates the first server in a way that location information can be changed fraudulently. This high security implementation is especially helpful to avoid a usage of the payment system by illegal organisations.

In an advantageous implementation of the method, the user equipment, the server, the payment system and the computer programme product, the user equipment contains means for handling location information and that the user equipment contains means for sending a purchase request message and wherein it contains means for adding location information to the purchase request message.

In a preferred embodiment of the method, the user equipment, the server, the payment system and the computer programme product, the user equipment obtains the location information by taking the location of at least one base station.

In an advantageous implementation of the method, the user equipment, the server, the payment system and the computer programme product, the user equipment obtains the location information by evaluating its relative position to at least one base station.

In a preferred embodiment of the method, the user equipment, the server, the payment system and the computer programme product, the user equipment obtains its coordinates relative to signal sending devices of a positioning system.

In an advantageous implementation of the method, the user equipment, the server, the payment system and the computer programme product, the first server is capable of receiving a purchase request message from a user equipment.

The user equipment is capable of sending an authorization request message which contains location information about the user equipment.

In a preferred embodiment of the method, the user equipment, the server, the payment system and the computer programme product, the authorization request message contains location information of the user equipment and the authorization server decides about the authorization of the payment by evaluating the location information.

In an advantageous implementation of the method, the user equipment, the server, the payment system and the computer programme product, the server is capable of receiving a purchase request message from a user equipment.

Preferably the server is capable of sending an authorization request message which contains location information about the user equipment. Advantageously the location information is derived from the purchase request message.

A further object of the invention is a payment system with a first server, a gateway server, an authorization server, wherein the first server is capable of receiving a purchase request message of a user equipment and of sending an authorization request message and wherein the authorization center decides about an authorization of a payment.

Preferably the payment system is capable of deriving location information from the purchase request message, the first server sends an authorization request message to the authorization server and the authorization server decides about the authorization of the payment by evaluating the location information.

In an advantageous implementation of the method, the user equipment, the server, the payment system and the computer programme product, the computer programme product contains a computer programme loadable in a user equipment and that the computer programme controls a generation and/or a sending of a purchase request message from the user equipment and wherein the computer programme adds location information to the purchase request message.

In a preferred embodiment of the method, the user equipment, the server, the payment system and the computer programme product, the computer programme encrypts the location information.

In an advantageous implementation of the method, the user equipment, the server, the payment system and the computer programme product, the computer programme product contains a programme loadable in a first server and that the computer programme is capable of taking location information from a purchase request message received by the first server and that the computer programme product is capable of adding the location information to an authorization request message which is sent from the first server to an authorization server.

In a preferred embodiment of the method, the user equipment, the server, the payment system and the computer programme product, the computer programme product contains a computer programme which is loadable in an authorization server, wherein the computer programme is capable of deciding about an authorization of a payment by evaluating location information contained in the authorization request message.

In the following preferred embodiments and advantages of the invention will be further described by means of examples and by means of the figures:
- Fig. 1: shows a schematic overview of a communication system,
- Fig. 2: shows sequences of an advantageous implementation of the invention and
- Fig. 3: shows sequences for generating a digital envelope for an encrypted transmission of the location information.

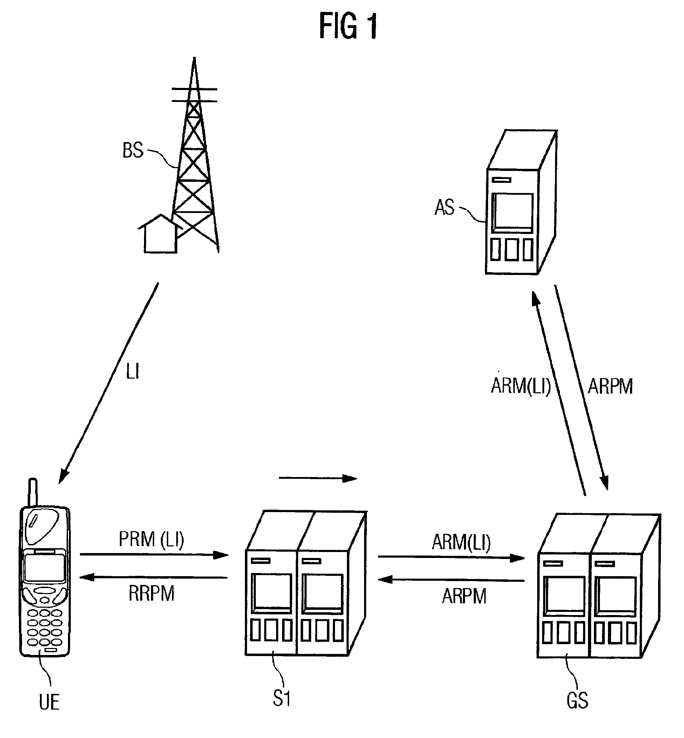

Fig. 1 shows a schematic overview of a communication system with first server S1 and an authorization server AS.

The communication system allows an advantageous implementation of the invention. However, the invention is not limited to the described communication system.

The number of servers is not limited. The communication system contains at least a first server, which is capable of receiving a purchase request message PRM from a user equipment UE and an authorization server AS.

However, it is possible to implement further servers as a gateway server GS.

In the following, advantageous embodiments of the invention will be described more detailed according to advanced on-line transaction services such as the Secure Electronic Transactions (SET™) Internet payment scheme.

However, the invention is not limited to the described examples. The invention implies a general solution for adding location information to a payment transaction. For better understanding, the mechanism is described in conjunction with the above mentioned SET™ payment protocol.

The communication network does not depend on a special transmission technology. Most preferably the communication network allows the user equipment to be mobile. Though it is not necessary to implement a radio transmission path, a usage of a suitable radio transmission path is advantageous. The radio transmission path can last from a few metres as for example according to the Bluetooth™ standard, a few kilometres in the case of cellular communication networks up to thousands of kilometres, for example in satellite based communication networks. Preferably cellular communication networks are operated according to the Global System for Mobile Communication (GSM) or the Universal Mobile Telecommunication System (UMTS). However, a mobility in this context also includes that the user equipment can be connected to other networks, for example through a socket.

Though the described example is preferred, each of the elements of the communication process described can be replaced by equivalent means.

A user equipment UE is capable of communicating in a multiple access communication system. Though it is not necessary, that the multiple access communication system contains a radio link. An implementation of a radio link is advantageous to increase the mobility of the user equipment.

Preferably the multiple access communication system operates according to the Global System for Mobile Communication (GSM), the Universal Mobile Telecommunication System (UMTS) or according to the Bluetooth™ standard.

The user equipment UE is capable of obtaining location information. In one implementation the user equipment obtains an approximated location information by taking the location of the nearest base station BS as location of the user equipment. The word base station BS does not imply any limitation as the invention can be carried out with different communication systems. Therefore the base station BS can also be a further mobile station, which functions at least partially as base station BS. For example in a communication system according to Bluetooth™ standard each of many user equipments can act as a base station BS for other user equipments. An implementation of the position of the base station BS is especially useful in a Bluetooth™ environment, as the communication path in this system is very short, so that the position of the base station BS and the user equipment are similar within a range of a few metres.

To use a relative position of the user equipment to one or more base stations BS is especially advantageous in cellular multiple access systems with a high density of base stations BS as in the GSM and UMTS communication systems.

However, it is also possible, that the user equipment UE evaluates its system by making use of a positioning system. This is especially sensefull, if the user equipment UE has only a radio contact to one base station BS or if the base stations BS are far away from each other, for example in a satellite based communication system. However, an implementation of location coordinates is possible in any of the communication systems.

The multiple access communication system allows a connection between the user equipment and a first server S1. The first server S1 is a logical node, preferably operated by a merchant.

The first server S1 is connected to a gateway server GS.

The gateway server GS is connected to an authorization centre.

Though the invention is not limited to a payment system according to the SET standard, an implementation of the invention according to this standard is preferred.

It is advantageous to carry out the invention with a payment system according to the SET standard or another standard in which a purchase request message PRM sent from the user equipment to the first server S1 contains an area for implementing additional information. Payments systems as SET with the possibility to implement additional information without limitations to formats allow to implement various payment parameters.

The implementation of flexible data sets with the ability to add further payment conditioned parameters PCP at an ambiguous time is advantageous. For example legalization in certain areas, regions or states can change. These changes can be implemented in the payment system according to the invention.

If for example a city, a region, a state or a country decides to forbid gambling, the information about the prohibition can be implemented to the payment system. This is a further advantage for credit card companies, as they can quickly adapt to changes in legislation and jurisdiction.

The communication between the first server S1 and the gateway server GS preferably occurs, according to an appropriate protocol as SET.

The gateway server GS is capable of communicating with an authorization server.

By using the communication system and the payment system, payment transactions can be treated flexibly.

The invention can be implemented according to different operating routines. This operating routine can be adapted to the needs and desires of the users as well as of money transferring entities as credit card organisations. This allows that location dependency can be handled different for different users or different types of users.

Credit card organisations often limit the amount which the users can spend in a certain time. In one embodiment it is only checked, if users are within their home country or outside. By analysing if the user is in his home country or not, the amount of accessible money can be triggered. For example it is possible, to reduce the amount of accessible money if people leave their home country or associated countries.

In a more complex implementation of the invention the dependency on countries can be more precisely adapted to the needs of customers and credit card organisations.

For example bearers of gold cards or frequent traveller cards can access high amounts of money even if they are outside their home zone but for some of the privileged users it may be useful to limit the usage in certain high risk countries.

Therefore the system can reduce transactions even of users holding gold or platinum cards if they are within certain high risk regions. In this way a usage of the card in high risk regions as disadvantaged areas in less developed countries can be blocked.

This risk minimising component can be flexibly combined with the access to certain services.

To fulfil legal requirements in certain areas the reason of the payment is evaluated. This reason is automatically treated and is in an especially advantageous embodiment of the invention combined to the location and/or movement of the user.

Preferably the user equipment evaluates its location and/or movement. It is possible, that the user equipment starts the evaluation of the location and/or movement automatically. However, it is also possible, that the user equipment determines its position only if it is ordered to do so, for example by the user or an external order, which could for example be obtained in a set up message.

The described sequences are part of a more complex signalling scenario. As ambiguous other elements of the communication system and of the payment system can be used, the invention is not limited to a specific implementation of them. To those skilled in the art it is known, that they can adopt other parts of the communication flexibly for example by sending appropriate set up messages or appropriate communication at the bearers of the communication system.

The location information is preferably encrypted. For example the purchase request message can contain the encrypted location information.

The information about the location and/or the movement are added to a purchase request message, which is sent from the user equipment to the first server S1.

It is especially advantageous, that the location information and/or further parameters of conditions of the payment are encrypted with a key which can not be decoded by the first server. This inhibits that a fraudulent merchant manipulates the first server in order to change the location information or the reasons of the payment.

Especially if location information is sent frequently, for example to increase the position of the authorization, it is useful to encrypt the location information differently as the purchase request message PRM.

If the location information is sent very often, a high number of messages exists and thus implies the risk, that determinable informations, especially the location itself, are evaluated and are compared with the encrypted message.

To prevent, that this enables rude force attacks for deriving the key, which is used for encrypting the information, it is useful, to encrypt the location information and other informations contained in the purchase request message PRM with different keys.

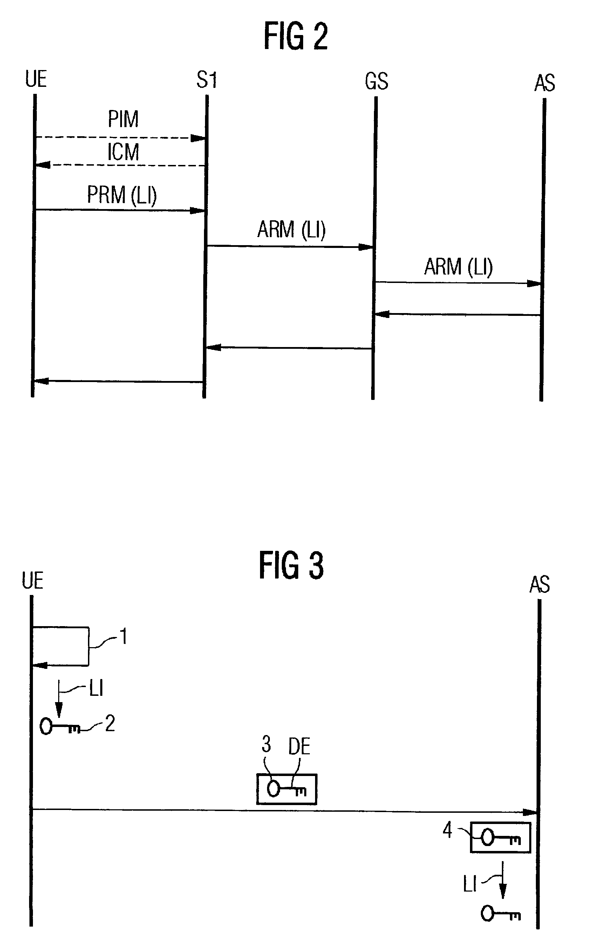

An advantageous implementation for exchanging the key between the user equipment and the authorization server is described in Fig. 3.

Fig. 3 shows, that the user equipment generates a digital envelope. The generation of the digital envelope involves the usage of a secure key, for example according to DES-standard or according to the triple-DES-standard. In Fig. 3 the generation of the key is marked by the reference number 1. The encryption of the location information is marked with the reference number 2.

Afterwards (reference number 3) a digital envelope DE is created and sent from the user equipment to the authorization server.

The authorization server first decrypts (reference number 4) the key and afterwards encrypts the location information (reference number 5).

This allows for example to prevent paying for activities in one country and afterwards crossing to a country in which these activities are not allowed.

If for example a user starts a transaction in Mexico to pay for gambling, the system will not allow the transaction, if it is invisible that he would enter the United States within a short time, especially the time in which the gambling takes place.

Afterwards it is described, how the preferred embodiments of the invention can be carried out according to the SET™. In this embodiment the user gives a subscription consent to the use location information for wireless credit card payment purposes. This consent can be considered as a part of the usual subscription procedure where the handling of other sensitive user information is defined (e.g. Toll ticketing information or calling line ID settings). This consent could also be given at service invocation.

The implementation of the location information can occur according any method. However, it is especially preferably to implement the procedures described in the other parts of this application. If the network already provides location information, it is especially useful to use this information, as for example the Mobile Network Code (MNC) of the Global System for Mobile Communication (GSM).

According to the SET™ standard, a payment starts by sending a purchase request message PRM from the user equipment UE to a first server. SET provides the possibility to add further information to already specified messages by using so-called message extensions. This implementation proposes to use such an extension to carry the location information from the wallet application in the user equipment up to the issuer.

The first server, which is preferably operated by or on behalf of a SET™ merchant, receives the purchase request message. The first server sends an authorization request message (ARM) to the SET Payment Gateway. The location information is carried to the Payment Gateway in a similar extension as described above.

Preferably the SET™ Payment Gateway itself also issues an authorization request to the SET issuer (typically the financial institution of the client).

The authorization server processes on behalf of the SET™ issuer the authorization request message ARM. For example, the authorization server could check the risk management specification for the current user and/or purchase transaction/location. If this specification puts any restrictions on the location information, this data is checked and corresponding action taken. The SET issuer may decide to decline the transaction based on the location information, or, as shown in Fig. 1 and Fig. 2, to accept it by returning an authorization response message ARPM to the SET Payment Gateway.

The SET Payment Gateway forwards the authorization response message ARPM to the first server (in any suitable message format).

Optionally the first server S1 sends a payment response message PRPM to the user equipment.

For those skilled in the art it is evident, that the measures, methods and implementations described in this application can be combined with each other without limitation. Therefore it is especially clear, that the invention is neither limited to certain communication protocols nor to certain payment protocols.

The invention enables users to perform transactions in various regions and countries. A credit card issuing company which makes use of the invention gets the advantage, that it can avoid risks of bad dept as well as risks of being taking responsible for illegal actions of the users of their credit cards.

### List of References:

- ARM: authorization request message
- ARPM: authorization response message
- AS: authorization server
- BS: base station
- GSM: Global System for Mobile Communication
- MNC: Mobile Network Code
- PCP: payment conditioned parameter
- PRM: purchase request message
- S1: first server
- SET™: Secure Electronic Transactions
- UE: user equipment
- UMTS: Universal Mobile Telecommunication System

- 1: generation of the key
- 2: encryption of the location information
- 3: creation of a digital envelope DE and its sending from the user equipment to the authorization server
- 4: decryption of the key by the authorization server
- 5: encryption of the location information by the authorization server

## Claims

1. Method of automatically paying an amount to an account, wherein an identifier and a transaction amount are acquired from a user equipment, wherein the transaction amount is verified and upon receipt from a verification, the transaction amount is transferred from the customer account to the account and wherein at least one parameter of the payment depends on the geographical position of the user equipment, **characterised in that** the user equipment sends a purchase request message (PRM) to a first server, wherein the purchase request message (PRM) includes information about the location of the user equipment (UE), that the first server sends an authorization request message (ARM) which contains the location information to an authorization server (AS), that the authorization server (AS) decides about an authorization of the payment by evaluating the location information and that the authorization centre decides about the authorization of the payment by evaluating the location information and that the authorization centre (AC) sends an authorization response message (ARPM) to the first server (S1) depending on the evaluation of the location information.

2. The method according to claim 1, **characterised in that** the authorization request message (ARM) also contains information about at least one payment condition parameter (PCP).

3. The method according to claim 2, **characterised in that** the authorization centre decides about the authorization of the payment by evaluating the location information and the payment condition parameter (PCP).

4. The method according to any of the claims 1 to 3, **characterised in that** the second server decides about the authorization depending on the country in which the user equipment is located.

5. The method according to any of the claims 1 to 4, **characterised in that** the second server decides about the authorization by evaluating a risk status of the region in which the user equipment is located.

6. The method according to any of the claims 2 to 5, **characterised in that** the payment condition parameter (PCP) contains information about the payee.

7. The method according to any of the claims 2 to 6, **characterised in that** the payment condition parameter (PCP) contains information about the payer.

8. The method according to any of the claims 2 to 7, **characterised in that** the payment condition parameter (PCP) contains information about a reason of the payment.

9. The method according to any of the claims 1 to 8, **characterised in that** the location information is obtained from a position of a base station of a communication system, wherein the base station is capable of sending and/or receiving signals from the user equipment.

10. The method according to any of the claims 1 to 9, **characterised in that** the relative position between the user equipment and a base station of a multiple access communication system is evaluated.

11. The method according to any of the claims 1 to 10, **characterised in that** the user equipment evaluates its position relative to signal sending devices of a positioning system.

12. The method according to claim 11, **characterised in that** the positioning system is the Global Positioning System.

13. The method according to any of the precedent claims, **characterised in that** the purchase request message (PRM) contains encrypted location information.

14. User equipment, capable of communicating in a multiple access communication system, **characterised in that** it contains means for handling location information, that it contains means for sending a purchase request message (PRM) and that it contains means for adding location information to the purchase request message (PRM).

15. The user equipment according to claim 14, **characterised in that** it obtains the location information by taking the location of at least one base station.

16. The user equipment according to claim 14, **characterised in that** it obtains the location information by evaluating its relative position to at least one base station (BS).

17. The user equipment according to any of the claims 14 to 16, **characterised in that** it obtains coordinates relative to signal sending devices of a positioning system.

18. Server (S1), **characterised in that** it is capable of receiving a purchase request message (PRM) from a user equipment, that it is capable of sending an authorization request message (ARM) and that the purchase request message (PRM) and the authorization request message (ARM) contain location information about the user equipment.

19. Payment system with a first server (S1), a gateway server GS, an authorization server (AS), wherein the first server is capable of receiving a purchase request message (PRM) of a user equipment and of sending an authorization request message (ARM) and wherein the authorization server decides about an authorization of a payment, **characterised in that** the payment system is capable of deriving location information from the purchase request message, the first server sends an authorization request message to the authorization server and the authorization server decides about the authorization of the payment by evaluating the location information.

20. Computer programme product, **characterised in that** it contains a computer programme loadable in a user equipment (UE) and that the computer programme controls a generation and/or a sending of a purchase request message (PRM) from the user equipment (UE) and wherein the computer programme adds location information to the purchase request message (PRM).

21. The computer programme product according to claim 20, **characterised in that** the computer programme encrypts the location information.

22. Computer programme product, **characterised in that** it contains a programme loadable in a first server (S1) and that the computer programme is capable of taking location information from a purchase request message received by the first server and that the computer programme product is capable of adding the location information to an authorization request message (ARM) which is sent from the first server (S1) to an authorization server.

23. Computer programme product, **characterised in that** it contains a computer programme which is loadable in an authorization server (AS), wherein the computer programme is capable of deciding about an authorization of a payment by evaluating location information contained in the authorization request message (ARM).
